(19) **Europäisches Patentamt**
**European Patent Office**
**Office européen des brevets**

(11) **EP 2 978 222 A1**

(12) **EUROPEAN PATENT APPLICATION**

(43) Date of publication:
**27.01.2016 Bulletin 2016/04**

(51) Int Cl.:
*H04N 19/44* $^{(2014.01)}$    *H04N 19/85* $^{(2014.01)}$

(21) Application number: **14306188.5**

(22) Date of filing: **23.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Aerts, Maarten**
**2018 Antwerpen (BE)**

• **Tytgat, Donny**
**2018 Antwerpen (BE)**
• **Lievens, Sammy**
**2018 Antwerpen (BE)**

(74) Representative: **D'Halleweyn, Nele Veerle Trees Gertrudis**
**Arnold & Siedsma**
**Bezuidenhoutseweg 57**
**2594 AC The Hague (NL)**

(54) **System and method for encoding and decoding a video signal**

(57)    An encoder for encoding a video signal, comprising a quantizer configured for quantizing a video signal; and a downsampler configured for downsampling said quantized video signal by dropping a number of samples of said quantized video signal based on a downsampling scheme, such that said quantized video signal contains fewer remnant samples after downsampling.

FIG. 5

EP 2 978 222 A1

**Description**

<u>Field of the Invention</u>

The field of the invention relates to video signal encoding and decoding. More in particular, the present invention relates to an encoder for encoding a video signal, a decoder for decoding an encoded video signal, a system for encoding and decoding a video signal, to methods for encoding and/or decoding a video signal, a computer program product for encoding a video signal, and to a computer program product for decoding a video signal.

<u>Background</u>

Encoding using compression based on smoothness (spatially and/or temporally) of video signals is computationally complex, since the smoothness must be detected and utilized. Many devices equipped with video cameras either do not have the computational power to detect smoothness, or would benefit from not having to detect smoothness (e.g. to save battery power for camera-equipped mobile devices).

<u>Summary</u>

An object of embodiments of the invention is to off-load the complexity of the compression away from the encoder, e.g. to a decoder. The decoder may be included in an end-user device or in an intermediate network node with sufficient computational power that further transmits the decoded video signal to an end-user device.
According to an aspect of the invention, there is provided a system for encoding and decoding a video signal. Said system comprises an encoder at a first device and a decoder at a second device remote from said first device. Said encoder is configured for encoding said video signal and comprises: a quantizer configured for quantizing said video signal; and a downsampler configured for downsampling said quantized video signal by dropping a number of samples of said quantized video signal based on said downsampling scheme, such that said quantized video signal contains fewer remnant samples after downsampling.
Said decoder is configured for decoding said encoded video signal and comprises: an upsampler configured for upsampling said encoded video signal by allocating a plurality of filler samples interspersed among said remnant samples of said encoded video signal based on an upsampling scheme associated with said downsampling scheme; and an integrator configured for determining a corresponding plurality of values for said plurality of filler samples by integrating at least one plurality of samples of said remnant samples of said encoded video signal. Said integrating of said at least one plurality of samples is performed over at least one, preferably finite, integration window chosen from the following integration windows: a spatiotemporal integration window, a spatial integration window and a temporal integration window.
In this manner, the encoder encodes what amounts to only a part of the original video signal to be decoded by the decoder, which poses less demands on the encoder since no complex processing techniques are required. This reduced demand decreases encoder circuitry complexity requirements and/or helps save battery power at the encoder. The quantizer allows exploiting redundancy in order to use fewer bits by (coarse) quantizing, improving storage and/or transmission requirements.
The downsampler allows to decrease the size of the video signal, improving storage and/or transmission requirements. Other known terminology for 'downsampling' comprises 'sub-sampling' or 'undersampling', which in the present specification are taken to mean the same.
The skilled person will understand that although the quantizer and the downsampler are shown as two separate entities in a specific order, this is not meant to be limiting. The skilled person could equally well devise a single entity configured for performing the functionality of both the quantizer and the downsampler. Likewise, the skilled person could equally well devise a different order for the operations, by configuring the downsampler to downsample the original video signal and by configuring the quantizer to operate on the downsampled signal.
By using an upsampling scheme that is associated with said downsampling scheme, the downsampler and the upsampler respectively downsample and upsample based on the same samples, obviating the need to encode separately specified sample choices, which improves storage and/or transmission requirements. The association can for instance be achieved by using an identical stored sampling scheme or by using reproducible sampling schemes based on an identically generated sequence using a known algorithm and, if applicable, seed (e.g. by using the same pseudo-random sequence generator).
The skilled person will understand that although the upsampler and the integrator are shown as two separate entities in a specific order, this is not meant to be limiting. The skilled person could equally well devise a single entity configured for performing the functionality of both the upsampler and the integrator. Likewise, the skilled person could equally well devise a different order for the operations, by configuring the integrator to determine said plurality of values and by configuring said upsampler to allocate said filler samples and instantiate their values accordingly.

In the present specification, the term 'democratic' is to be understood in the sense that no data are essential to decoding the video signal, but all data contribute to the accuracy of said decoding.

In the present specification, the expression 'A and/or B' is to be understood that at least one of A and B is meant.

In the present specification, a 'video frame' is a still image of a series of still images that together comprise a video signal. Each video frame comprises or contains a plurality of samples: pixels or pixel differences.

In the present specification, a spatiotemporal integration window represents the static or dynamic interval over which samples are integrated. A spatiotemporal integration window preferably comprises three dimensions: namely the time dimension (for samples across video frames) and two spatial dimensions (for neighbouring samples in a video frame). In this way, the dimensions that are intrinsically present in typical video signals, namely time and two-dimensional space, may be integrated. Also, the skilled person will understand that said spatiotemporal integration window may be implemented as a single spatiotemporal entity, or as a combination of a temporal entity and one or more spatial entities.

In the present specification, 'allocating filler samples' is to be understood in the light of knowledge of the skilled person who wishes to upsample a signal, for instance by creating or allocating new vacant samples (for preferred embodiments: null-valued samples whose values are determined by integrating at least one plurality of samples) between, to either or both of the sides of, or around existing samples. The skilled person will understand the meaning of the notion 'interspersed' from this consideration.

In the present specification, 'subsequent' video frames are video frames that follow each other in a succession in time. The succession need not be contiguous, i.e. other video frames than the subsequent video frames may be interleaved between the subsequent video frames.

In the present specification, an 'optical transport operator' is an operator that defines correspondence points or regions between different frames, thereby allowing integration in time along motion paths rather than over the same pixel or pixels.

According to an embodiment, said quantizer is an operator configured for quantizing said video signal, preferably coarsely, by reducing a dynamic range of values of samples of said video signal.

By quantizing (approximating) it is possible to decrease the necessary number of bits to represent a signal. By preferably quantizing coarsely as opposed to finely, which means that relatively few discrete values are used (as opposed to relatively many), it is possible to decrease said necessary number even more.

According to an embodiment, said encoder comprises a transmitter configured for transmitting said encoded digital video signal; and said decoder comprises a receiver configured for receiving said encoded digital video signal from said transmitter.

The skilled person will appreciate that the use of a transmitter and a receiver is merely one of many possible embodiment for connecting an encoder and a decoder to make available the encoded digital video signal from the encoder to the decoder. Another embodiment may for example comprise using a direct data bus connection between said encoder and said decoder for providing to said decoder an encoded signal. Yet another embodiment may for example comprise using a memory storage to which an encoded signal is stored by said encoder and from which it is retrieved by said decoder.

According to an embodiment, said decoder comprises an estimator configured for estimating at least one of: a temporal change map representing video signal gradients in time; a spatial change map representing video signal gradients in space; and at least one transport parameter representative for at least one optical transport operator. Said integrator is configured for determining said corresponding plurality of values taking into account at least a corresponding one of said temporal change map, said spatial change map and said at least one transport parameter.

In this manner, regions of the video signal that are not entirely smooth but that contain more or less abrupt edges and contours can be reconstructed during decoding using temporal and/or spatial change maps that are estimated by the change estimation module. This estimation and reconstruction process may be an iterative energy minimization problem. Moreover, not having to transmit a (non-smooth) gradient map improves storage and/or transmission requirements.

This also makes it possible to take account of typical transport phenomena occurring in video signals, and thus to better model and hence reconstruct the video signal. The skilled person will know many optical transport operators and corresponding parameters, such as the following non-exhaustive list: (fully dense) optical flow maps, (piecewise linear) homography segmentations, sparser feature matches, temporal superpixels, KLT tracks, gridded warps, etc.

According to an embodiment, said encoder comprises a detector configured for detecting at least one of: a temporal change map representing video signal gradients in time; and a spatial change map representing video signal gradients in space. Said downsampler is configured for: downsampling said quantized video signal taking into account at least a corresponding one of said temporal change map and said spatial change map, such that video signal spatiotemporal regions with significant change retain more remnant samples; and communicating information pertaining to at least said corresponding one of said temporal change map and said spatial change map to said upsampler. Said upsampler is configured for upsampling said encoded video signal taking into account said communicated information. Said integrator is configured for controlling said at least one, preferably finite, integration window taking into account sampling densities of spatiotemporal regions of said upsampled video signal, for instance by taking into account that samples in a sparsely sampled region may be integrated over larger integration windows than samples in densely sampled regions.

In this manner, using a small processing step, the encoder will be able to use gradient information to sample regions with many gradients close to each other more densely than other regions. To probe the temporal and/or spatial local scale of the video signal image data, the encoder can e.g. iterate through mipmaps (image scale pyramid) since these typically retain substantially steep gradients across multiple mipmap copies. This obviates the need to send gradient maps from the encoder to the decoder.

According to an embodiment, said encoder comprises a detector configured for: detecting at least one transport parameter representative for at least one optical transport operator. Said downsampler is configured for downsampling said quantized video signal taking into account said at least one transport parameter. Said integrator is configured for determining said corresponding plurality of values taking into account said at least one transport parameter.

In this manner, it is possible to take account of typical transport phenomena occurring in video signals, and thus to better model and hence reconstruct the video signal. The skilled person will know many optical transport operators and corresponding parameters, such as the following non-exhaustive list: (fully dense) optical flow maps, (piecewise linear) homography segmentations, sparser feature matches, temporal superpixels, KLT tracks, gridded warps, etc. The skilled person will further understand how to configure said detector and said integrator such that said integrator may take into account said at least one transport parameter.

According to an aspect of the invention, there is provided an encoder for encoding a video signal, preferably for use in any one of the aspects and embodiments of a system described above. Said encoder comprises: a quantizer configured for quantizing a video signal; and a downsampler configured for downsampling said quantized video signal by dropping a number of samples of said quantized video signal based on a downsampling scheme, such that said quantized video signal contains fewer remnant samples after downsampling.

According to an embodiment, said quantizer is an operator configured for quantizing said video signal, preferably coarsely, by reducing a dynamic range of values of samples of said video signal.

According to an embodiment, said encoder comprises a detector configured for detecting at least one of: a temporal change map representing video signal gradients in time; and a spatial change map representing video signal gradients in space. Said downsampler is configured for: downsampling said quantized video signal taking into account at least a corresponding one of said temporal change map and said spatial change map, such that video signal spatiotemporal regions with significant change retain more remnant samples; and communicating information pertaining to at least said corresponding one of said temporal change map and said spatial change map to an upsampler of a decoder for decoding said encoder's encoded video signal.

According to an embodiment, said encoder comprises a detector configured for: detecting at least one transport parameter representative for at least one optical transport operator. Said downsampler is configured for downsampling said quantized video signal taking into account said at least one transport parameter. Said at least one transport parameter may preferably further be taken into account by an integrator of a decoder for decoding said encoder's encoded video signal.

It will be appreciated that substantially the same features, technical considerations and advantages as described hereinabove with respect to aspects and embodiments of the system also apply to aspects and embodiments of the encoder, *mutatis mutandis.*

According to an aspect of the invention, there is provided a decoder for decoding a video signal, preferably for use in any one of the aspects and embodiments of a system described above. Said decoder comprises: an upsampler configured for upsampling said encoded video signal by allocating a plurality of filler samples interspersed among said remnant samples of said encoded video signal based on an upsampling scheme associated with said downsampling scheme; and an integrator configured for determining a corresponding plurality of values for said plurality of filler samples by integrating at least one plurality of samples of said remnant samples of said encoded video signal. Said integrating of said at least one plurality of samples is performed over at least one, preferably finite, integration window chosen from the following integration windows: a spatiotemporal integration window, a spatial integration window and a temporal integration window.

According to an embodiment, said decoder comprises an estimator configured for estimating at least one of: a temporal change map representing video signal gradients in time; a spatial change map representing video signal gradients in space; and at least one transport parameter representative for at least one optical transport operator. Said integrator is configured for determining said corresponding plurality of values taking into account at least a corresponding one of said temporal change map, said spatial change map and said at least one transport parameter.

It will be appreciated that substantially the same features, technical considerations and advantages as described hereinabove with respect to aspects and embodiments of the system also apply to aspects and embodiments of the decoder, *mutatis mutandis.*

According to an aspect of the invention, there is provided a method for encoding and decoding a video signal. Said method comprises: encoding said video signal and decoding said video signal.

Said encoding of said video signal comprises: quantizing said video signal; and downsampling said quantized video signal by dropping a number of samples of said quantized video signal based on a downsampling scheme, such that said quantized video signal contains fewer remnant samples after downsampling.

Said decoding of said encoded video signal comprises: upsampling said encoded video signal by allocating a plurality of filler samples interspersed among said remnant samples of said encoded video signal based on an upsampling scheme associated with said downsampling scheme; and determining a corresponding plurality of values for said plurality of filler samples by integrating at least one plurality of samples of said remnant samples of said encoded video signal. Said integrating of said at least one plurality of samples is performed over at least one, preferably finite, integration window chosen from the following integration windows: a spatiotemporal integration window, a spatial integration window and a temporal integration window.

It will be appreciated that substantially the same features, technical considerations and advantages as described hereinabove with respect to aspects and embodiments of the system also apply to aspects and embodiments of the method, *mutatis mutandis.*

According to an embodiment, said quantizing of said video signal comprises quantizing said video signal, preferably coarsely, by reducing a dynamic range of values of samples of said video signal.

According to an embodiment, said method comprises: estimating at least one of a temporal change map representing video signal gradients in time; a spatial change map representing video signal gradients in space; and at least one transport parameter representative for at least one optical transport operator; and determining said corresponding plurality of values taking into account at least a corresponding one of said temporal change map, said spatial change map and said at least one transport parameter.

According to an embodiment, said method comprises: detecting at least one of a temporal change map representing video signal gradients in time; and a spatial change map representing video signal gradients in space; and downsampling said quantized video signal taking into account at least a corresponding one of said temporal change map and said spatial change map, such that video signal spatiotemporal regions with significant change retain more remnant samples; communicating information pertaining to at least said corresponding one of said temporal change map and said spatial change map to said upsampler; upsampling said encoded video signal taking into account said communicated information; and controlling said at least one, preferably finite, integration window taking into account sampling densities of spatiotemporal regions of said upsampled video signal, for instance by taking into account that samples in a sparsely sampled region may be integrated over larger integration windows than samples in densely sampled regions..

According to an embodiment, said method comprises: detecting at least one transport parameter representative for at least one optical transport operator; downsampling said quantized video signal taking into account said at least one transport parameter; and determining said corresponding plurality of values taking into account said at least one transport parameter.

According to an aspect of the invention, there is provided a method for encoding a video signal, comprising the following steps performed at an encoder: quantizing a video signal; and downsampling said quantized video signal by dropping a number of samples of said quantized video signal based on a downsampling scheme, such that said quantized video signal contains fewer remnant samples after downsampling.

According to an embodiment, said quantizing of said video signal comprises quantizing said video signal, preferably coarsely, by reducing a dynamic range of values of samples of said video signal.

According to an embodiment, said method comprises the following steps performed at said encoder: detecting at least one of a temporal change map representing video signal gradients in time; and a spatial change map representing video signal gradients in space; and downsampling said quantized video signal taking into account at least a corresponding one of said temporal change map and said spatial change map, such that video signal spatiotemporal regions with significant change retain more remnant samples; communicating information pertaining to at least said corresponding one of said temporal change map and said spatial change map to an upsampler of a decoder for decoding said encoded video signal.

Further, said method comprises the following steps performed at said decoder; upsampling said encoded video signal taking into account said communicated information; and controlling said at least one, preferably finite, integration window taking into account sampling densities of spatiotemporal regions of said upsampled video signal, for instance by taking into account that samples in a sparsely sampled region may be integrated over larger integration windows than samples in densely sampled regions..

According to an embodiment, said method comprises the following steps performed at an or said encoder: detecting at least one transport parameter representative for at least one optical transport operator; downsampling said quantized video signal taking into account said at least one transport parameter; and the following step performed at said decoder: determining said corresponding plurality of values taking into account said at least one transport parameter.

It will be appreciated that substantially the same features, technical considerations and advantages as described hereinabove with respect to aspects and embodiments of the system also apply to aspects and embodiments of the method, *mutatis mutandis.*

According to an aspect of the invention, there is provided a method for decoding an encoded video signal, comprising the following steps performed at a decoder: upsampling said encoded video signal by allocating a plurality of filler samples interspersed among said remnant samples of said encoded video signal based on an upsampling scheme associated with said downsampling scheme; and determining a corresponding plurality of values for said plurality of filler samples by integrating at least one plurality of samples of said remnant samples of said encoded video signal. Said integrating of said at least one plurality of samples is performed over at least one, preferably finite, integration window chosen from the following integration windows: a spatiotemporal integration window, a spatial integration window and a temporal integration window.

According to an embodiment, said method comprises: estimating at least one of a temporal change map representing video signal gradients in time; a spatial change map representing video signal gradients in space; and at least one transport parameter representative for at least one optical transport operator; and determining said corresponding plurality of values taking into account at least a corresponding one of said temporal change map, said spatial change map and said at least one transport parameter.

It will be appreciated that substantially the same features, technical considerations and advantages as described hereinabove with respect to aspects and embodiments of the system also apply to aspects and embodiments of the method, *mutatis mutandis.*

According to an aspect of the invention, there is provided a computer program product comprising non-transitory computer-executable instructions configured to, when executed, perform the steps of any one of the methods for encoding a video signal as described hereinabove.

According to another aspect of the invention, there is provided a computer program product comprising non-transitory computer-executable instructions configured to, when executed, perform the steps of any one of the methods for decoding an encoded video signal as described hereinabove.

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

Figure 1 illustrates the continuity principle;
Figure 2 illustrates schematically a delta-sigma modulation/demodulation system and an example input and output;
Figure 3 illustrates schematically a method operation for compressive sensing;
Figure 4 illustrates schematically a method block diagram for superresolution ;
Figure 5 illustrates schematically an exemplary embodiment of the system;
Figure 6 illustrates schematically another exemplary embodiment of the system;
Figure 7 illustrates schematically yet another exemplary embodiment of the system;
Figure 8 illustrates schematically yet another exemplary embodiment of the system; and
Figure 9 illustrates schematically yet another exemplary embodiment of the system.

Description of Embodiments

Most of the data that occurs in video signals is smooth, both spatially and temporally. When these signals are transmitted, advantage can be taken of that smoothness property to remove any redundancies stemming from continuity assumptions, which allows significant compression gains. The way that this is typically done is mainly driven by those gains, which comes with a cost of complexity at the encoder for finding those redundancies. E.g. for the MPEG (Motion Picture Experts Group) family of encoders this requires DCT (Discrete Cosine Transforms) transforms and motion prediction.

While more and more devices are equipped with cameras, some of them do not have the computational power needed for doing this type of encoding. It is therefore advantageous to off-load the complexity of the compression technique to the decoder's side - or if the decoder is linked to a communication network to which a network node belongs that stores or transmits the encoded video signal (e.g. as part of a cloud service), at least to a network node in the network that is linked to the decoder and that does have the necessary computational power.

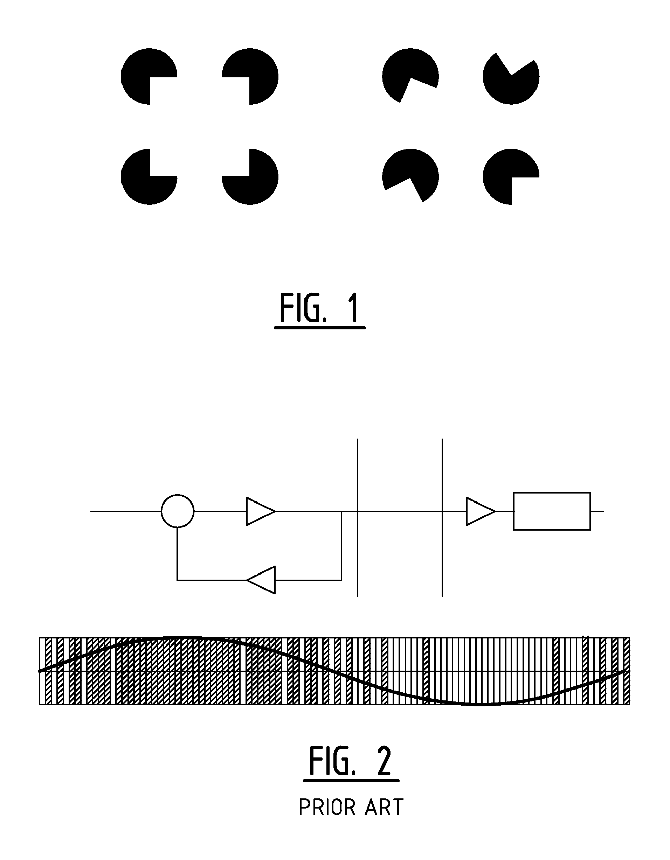

This requires simple encoding techniques that take advantage of the smoothness assumption without modelling that smoothness at the encoder. Consider Gestalt-psychology: our brain often sees more than there is, due to such continuity assumptions. Figure 1 illustrates that missing contours can be added in our mind: on the right, the four partial discs are unstructured and do not appear continuous, whereas on the left, the four partial discs are seemingly enclosing a square due to the assumption of continuity. Analogously, it is possible to drop information at the encoder side, but fill it in later at the decoder, using continuity assumptions.

Known techniques to simplify encoding complexity are Delta-Sigma Modulation, Compressive Sensing, Superresolution, and Template Matching. However, these known techniques suffer from certain shortcomings, as will be explained herein below. An additional benefit of embodiments of the invention is that they solve the shortcomings of the known techniques. In particular, embodiments of the invention are democratic while still allowing random-access. Also, embodiments of the invention require less complex and better understood processing. Additionally, embodiments of the invention do not require building codebooks for dictionary encoding, which is a complex operation. Also, there is no need for a feedback channel from the decoder to the encoder.

Delta modulation (illustrated in figure 2) and the related delta-sigma modulation are simple techniques for encoding a single linear signal. Delta coding is a way of quantizing a continuous signal, often using a single bit. In the figure, the bottom shows a sine wave and its corresponding delta-sigma modulated encoding comprising a sequence of bit pulses, wherein the averaged frequency over some pulse time window encodes the amplitude of the original sine wave. Originally an analogue-to-digital conversion technique, it also was a standard for encoding audio signals on Super Audio CD's, because of some properties. First, it is very easy to encode and decode. Secondly, all encoded bits are treated equally. There is no least-significant or most-significant bit. There are no codes. If a bit is misread or damaged, the effect remains very local and yields small distortions. Hence, there is no need for error correction codes. This means, that deliberately dropping bits using this type of encoding, effectively making this lossless technique into a lossy one, does not distort the image overly much. So, none of the bits is essential, but all contribute to the accuracy of the output, which constitutes democratic coding.

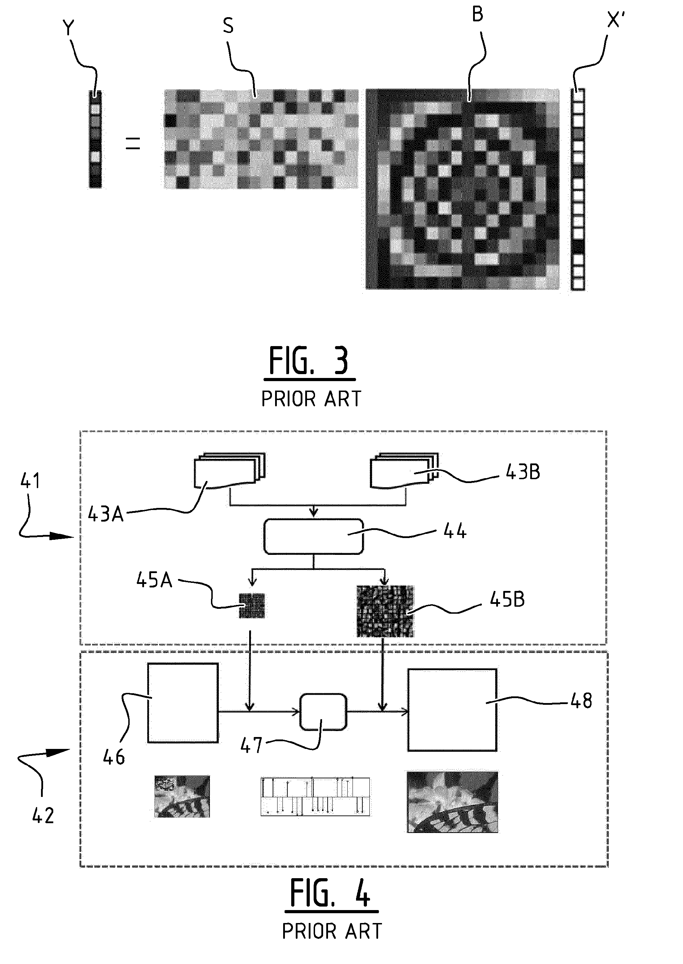

Compressive sensing (illustrated in figure 3) epitomizes trading all complexity in the encoder and putting it in the decoder. By performing a simple linear transformation on an input signal, scrambling all redundancy over the whole image, the information part of the signal is spread randomly. The transformed image is then downsampled (undersampled) for compression. Because of the spreading, theoretically all information that was in the original signal, will still be in the compressed one, although scrambled, given an upper bound on the compression rate. The figure illustrates how an image x (not shown) may be decomposed in a sparse set of coefficients x' and a well-chosen set of basis functions B. This signal is encoded by equally spreading the information in x' by taking a set of random linear combinations S. The problem is in the decoder, which has to solve the computationally very complex task of descrambling the information to retrieve the original video signal. This process may be solved by basis pursuit, a technique based on the sparsity of the video signal. The technique is very complex. No implementations approach real-time and it is not quite fully understood theoretically. The accuracy of the output depends on what short-cuts are taken in solving the basis pursuit problem to make it tractable.

Superresolution (illustrated in figure 4) is related to compressive sensing. The input signal 43A, 43B is encoded by sending a low-resolution version 43A, together with a small dictionary 44 of low-res 45A to high-res 45B matches. As such, basis pursuit reduces to finding the sparse combination 47 of low-res dictionary entries 45A composing each patch of the video signal 46. The dictionary is then used to resolve 42 the high resolution output 48. Again, this is a fairly simple encoding technique and decoding can easily be done in real-time. The compression gains are limited though, reducing the technique to a wrapper around existing coding techniques for sending the low-res image. Also, the quality of the basis pursuit algorithm is very dependent on the noise introduced by the enclosed low-res decoded image. Also, building 41 the dictionary is complex.

Template matching at the decoder is another low-complexity encoding technique. It off-loads template matching in a prediction step to the decoder. By a specific choice of template shape and scanning order, the decoder can base its prediction solely on already decoded data. But this requires a feedback channel to the encoder that has to send the residuals and therefore needs the decoded output.

Another approach would be to encode differences. If consecutive frames look so much alike, just send the first frame and send frame differences for all others. Subtracting two frames is a low complexity operation. This creates another problem, though. For encoding a frame, you first need to encode all previous ones and errors get accumulated. This hinders random access to the video. To solve this issue, MPEG uses GOP-blocks (Group Of Pictures), limiting the scope of video frames that are needed for decoding. For a low-complexity encoder, this discretization into GOP-blocks would result in visible artefacts and higher bitrates.

To overcome at least a number of the shortcomings described above, embodiments of the present invention aim to present a new coding technique with a low-complexity encoder, being democratic in the way that no data is essential but all data contribute to the accuracy, and wherein decoding is still tractable. This is *inter alia* made possible by imposing models at the decoder that are similar to the continuity assumptions.

Mathematically, denote y(t) as the input image and x(t) as the encoded data. Instead of having a decoded output:

$$\hat{y}(t) = \int\limits_0^t x(u)\mathrm{d}u$$

which yields simple frame differencing:

$$x(t) = \frac{\mathrm{d}y(t)}{\mathrm{d}t}$$

However, it is better to have the windowed:

$$\hat{y}(t) = \int\limits_0^t w(u - t)x(u)\mathrm{d}u$$

which yields:

$$x(t) \sim \frac{\mathrm{d}y(t)}{\mathrm{d}t} + \int\limits_0^t w'(u - t)x(t)\mathrm{d}u$$

This means that to decode using a limited window, it is necessary to encode the differences together with a part of the original signal. By sending the new information, but also small parts of the already integrated data, the decoder should only integrate over a limited integration window (e.g. a limited scope of video frames) and random access is possible. Just like MPEG, the amount of distortion in the reconstructed signal then depends on how well the definitions of redundancy hold. If we assume the video to be spatially or temporally smooth and integrate samples accordingly, a non-conforming video signal will be distorted. Note that this distortion will be more natural, like with the Super Audio CD, introducing less artefacts than MPEG. In some cases, some pre-processing may be helpful to enable imposing such assumptions. There will then be a trade-off between how much complexity such pre-processing steps add to the encoder and the increase of accuracy.

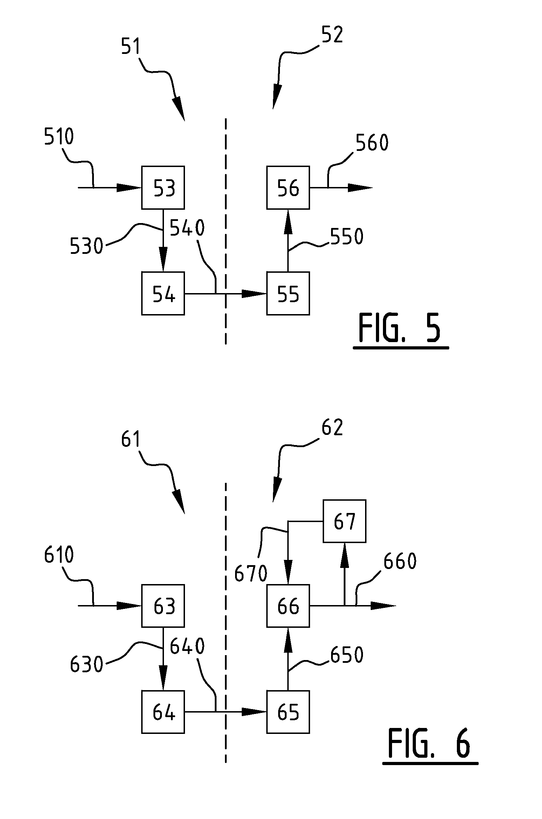

Figure 5 illustrates schematically an exemplary embodiment of a system according to the present invention. The system is suitable for encoding 540 and decoding 560 a video signal 510. Said system comprises an encoder 51 and a decoder 52.

Said encoder 51, at a first device (not indicated), is configured for encoding 540 said digital video signal 510. Said encoder 51 comprises: a quantizer 53 configured for quantizing 530 said video signal. Said encoder 51 further comprises a downsampler 54 configured for downsampling 540 said video signal by dropping a number of samples of said quantized video signal based on a downsampling scheme, such that said quantized video signal contains fewer remnant samples after downsampling. It will be appreciated that said dropping is a low-complexity operation.

Said decoder 52, at a second device (not indicated) remote from said first device, is configured for decoding 560 said encoded video signal 540. Said decoder 52 comprises: an upsampler 55 configured for upsampling 550 said encoded video signal by allocating a plurality of filler samples interspersed among said remnant samples of said encoded video signal based on an upsampling scheme associated with said downsampling scheme. Said decoder 52 further comprises an integrator 56 configured for determining 560 a corresponding plurality of values for said plurality of filler samples by integrating at least one plurality of samples of said remnant samples of said encoded video signal, over at least one integration window, which is preferably finite to allow for random access, and which can be a spatiotemporal integration window, a spatial integration window and/or a temporal integration window.

Figure 6 illustrates schematically an exemplary embodiment of a system according to the present invention. The system embodiment corresponds analogously to the system embodiment illustrated in figure 5, with the inclusion of an estimator 67 in the decoder 62. The estimator 67 is configured for estimating 670 at least one transport parameter representative for at least one optical transport operator. Further, said integrator 66 is configured for determining 660 said corresponding plurality of values taking into account said at least one transport parameter.

An exemplary transport parameter is flow maps. The flow maps are more smooth than the temporal and spatial smoothness of the video signal and thus may be encoded efficiently and stored and/or transmitted for the decoder's 62 use. However, computing the flow maps may be computationally hard, so it may be advantageous to off-load the optical flow computation to the decoder 62. Note that the decoder 62 will have to do so on the incomplete, downsampled signal coming from the encoder 61, but because of better smoothness assumptions, this is possible by solving an energy minimization problem iteratively by variational methods, expectation maximization, belief propagation, bilateral filtering, etc. or globally with graph cut algorithms.

The skilled person will understand that in further developed embodiments of this exemplary embodiment of a system according to the present invention the estimator 67 may further be configured for estimating 670 at least one of a temporal change map representing video signal gradients in time and a spatial change map representing video signal gradients in space, and the integrator 66 may further be configured for determining 660 said corresponding plurality of values taking into account said temporal change map and/or said spatial change map.

Another type of transport operator is the homography. Instead of computing dense maps, it is possible to group pixels into regions mapped by the same homography. Modelling a scene by a collection of planar regions helps compression by imposing temporal consistency of those regions. The appearance of those planes between two consecutive frames will be related by one homography per plane. It is also possible to model each plane over multiple video frames, using a reference texture and multiple homographies. This way the video input signal is separated in slowly varying texture maps and the dynamically changing parameters of the homographies. These texture maps are an aggregation of information of their different appearances under various homography transformations in multiple video frames. In some video frames some parts of the planar region are clearly visible and up front, while they may be small or occluded in other video frames. However, the appearances are at least partially redundant. It is advantageous to exploit this redundancy. The video signal here varies more slowly than a regular video signal, so it would make sense to choose a big scope (cf. GOP size) to get better compression.

In an online setting, the texture maps would have to be built democratically, meaning each new video frame adds new information to it. Additionally, the accuracy depends on the size of the chosen scope. Integrating over more video frames (a larger integration time window) yields more accuracy.

If the encoder samples uniformly, agnostic of the homographies, up-front regions of the texture maps will be more densely sampled than low-res parts.

A reference texture may be composed from different views of a planar object that are related through homographies. The homographies guide the integration process. They define which pixels correspond over time and define the resolution at which they were sampled by the encoder. By taking both into account, one may achieve texture maps at even higher resolutions than the input video.

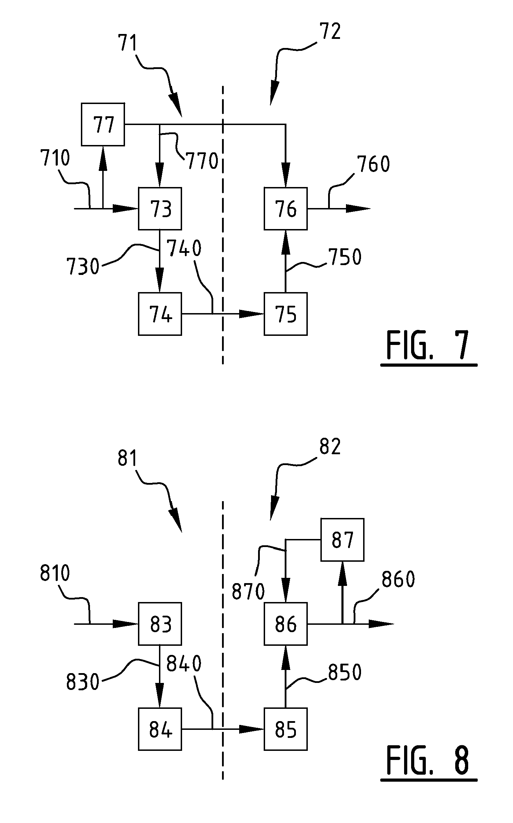

Figure 7 illustrates schematically another exemplary embodiment of a system according to the present invention. The system embodiment corresponds analogously to the system embodiment illustrated in figure 5, with the inclusion of a detector 77 in the encoder 71. The detector 77 is configured for detecting 770 at least one transport parameter representative for at least one optical transport operator. Said downsampler 74 is configured for downsampling 740 said quantized video signal taking into account said at least one transport parameter, for instance by sampling more densely in regions where optical transport is more severe. In the exemplary embodiment shown in the figure, said detected 770 at least one transport parameter can be passed to the downsampler 74 via the quantizer 73. Further said integrator 76 is configured for determining 760 said corresponding plurality of values taking into account said at least one transport parameter.

Assuming that a pixel in the next video frame is similar to the same pixel in the previous video frame plus some perturbation is not the best model. It is better to assume that a pixel resembles one of its neighbours in the previous video frame. Which neighbour that is, is defined by a transport operator. One such transport operator is optical flow. This operator yields smooth, dense displacement maps for each pixel for consecutive video frames. This allows better modelling and better reconstruction of the video signal. In this case, integration is not performed over fixed integration windows or integration windows adapted to gradient maps, but over integration windows that are (at least partially) determined by the transport operator, in this case optical flow.

Figure 8 illustrates schematically yet another exemplary embodiment of a system according to the present invention. The system embodiment corresponds analogously to the system embodiment illustrated in figure 5, with the inclusion of an estimator 87 in the decoder 82. The estimator 87 is configured for estimating 870 at least one of a temporal change map representing video signal gradients in time and a spatial change map representing video signal gradients in space. The integrator 86 is configured for determining 860 said corresponding plurality of values taking into account said temporal change map and/or said spatial change map.

In real-world practice, video signals are neither temporally nor spatially really smooth. Object contours result in abrupt edges (changes) spatially and occlusions result in steep temporal edges (changes). To overcome this, the integrator 86 may control its at least one integration window, e.g. by adapting one or more parameters that manage its integration windows (such as weights of the integration windows) to these image gradients (either in space or in time or in both). Unfortunately, the decoder 82 does not have easy access to the image gradients (it receives only the encoded video signal 840). The encoder 81 does have access to the image gradients, but encoding these non-smooth gradient maps may be complex. Therefore, the decoder 82 comprises an estimator 87 to estimate 870 the temporal change map and/or the spatial change map. Preferably, this estimating is done simultaneously while reconstructing 860 the video signal, so as to be able to better compare the result with new change estimates. The problem at hand is an energy minimization problem that may be solved iteratively by variational methods, expectation maximization, belief propagation, bilateral filtering, etc. or globally with graph cut algorithms.

The skilled person will understand that in further developed embodiments of this exemplary embodiment of a system according to the present invention the estimator 87 may further be configured for estimating 870 at least one transport parameter representative for at least one optical transport parameter, and the integrator 86 may further be configured for determining 860 said corresponding plurality of values taking into account said at least one transport parameter.

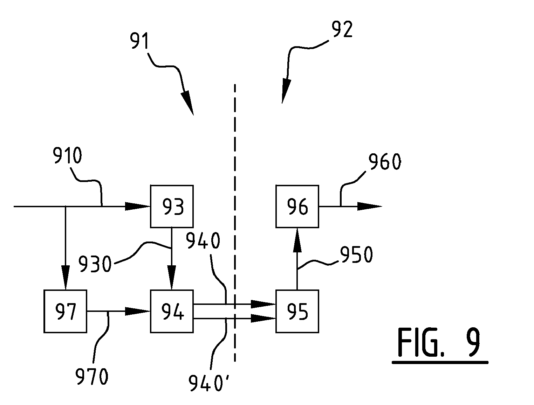

Figure 9 illustrates schematically yet another exemplary embodiment of a system according to the present invention. The system embodiment corresponds analogously to the system embodiment illustrated in figure 5, with the inclusion of a detector 97 in the encoder 91. The detector 97 is configured for detecting 970 a temporal change map representing video signal gradients in time and/or a spatial change map representing video signal gradients in space. Further, said downsampler 94 is configured for downsampling 940 said quantized video signal taking into account at least one of said temporal change map and/or said spatial change map, such that video signal regions with significant change retain more remnant samples; and communicating 940' information (such as sample locations) pertaining to at least said corresponding one of said temporal change map and said spatial change map to said upsampler 95. Further, said integrator 96 is configured for controlling its at least one integration window taking into account implicitly present information, such as sampling densities of spatiotemporal regions of said upsampled video signal, for example indirectly by taking into account that samples in sparsely sampled regions may be integrated over larger integration windows than samples in densely sampled regions.

Since the encoder 91 has access to gradient information, it can sample the regions with many gradients close to each other more densely than other regions, implicitly indicating gradient maps. Probing the temporal and/or spatial local scale of video signal image data, requires simple mipmapping followed by a single iteration through the multiple levels of detail, since coarse regions (as opposed to regions with fine textures) will be present in multiple mipmaps. These steps require only low complexity.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

**Claims**

1. An encoder for encoding a video signal, comprising:

   - a quantizer configured for quantizing a video signal; and
   - a downsampler configured for downsampling said quantized video signal by dropping a number of samples of said quantized video signal based on a downsampling scheme, such that said quantized video signal contains fewer remnant samples after downsampling.

2. The encoder of claim 1, wherein said quantizer is an operator configured for quantizing said video signal, preferably coarsely, by reducing a dynamic range of values of samples of said video signal.

3. The encoder of any one of the previous claims, comprising a detector configured for detecting at least one of:

   - a temporal change map representing video signal gradients in time; and
   - a spatial change map representing video signal gradients in space; and

   wherein said downsampler is configured for:

   - downsampling said quantized video signal taking into account at least a corresponding one of said temporal change map and said spatial change map, such that video signal spatiotemporal regions with significant change retain more remnant samples; and
   - communicating information pertaining to at least said corresponding one of said temporal change map and said spatial change map to an upsampler of a decoder for decoding said encoded video signal;

   wherein said upsampler is configured for upsampling said encoded video signal taking into account said communicated information; and
   wherein an integrator of said decoder is configured for controlling said at least one, preferably finite, integration window taking into account sampling densities of spatiotemporal regions of said upsampled video signal.

4. The encoder of any one of the previous claims, comprising a detector configured for detecting at least one transport parameter representative for at least one optical transport operator;
   wherein said downsampler is configured for downsampling said quantized video signal taking into account said at least one transport parameter; and
   wherein an or said integrator of said decoder is configured for determining said corresponding plurality of values taking into account said at least one transport parameter.

5. A decoder for decoding a video signal, comprising:

   - an upsampler configured for upsampling said encoded video signal by allocating a plurality of filler samples interspersed among said remnant samples of said encoded video signal based on an upsampling scheme associated with said downsampling scheme; and
   - an integrator configured for determining a corresponding plurality of values for said plurality of filler samples by integrating at least one plurality of samples of said remnant samples of said encoded video signal; wherein said integrating of said at least one plurality of samples is performed over at least one, preferably finite, integration window chosen from the following integration windows: a spatiotemporal integration window, a spatial integration window and a temporal integration window.

6. The decoder of claim 5, comprising an estimator configured for estimating at least one of:

- a temporal change map representing video signal gradients in time;
- a spatial change map representing video signal gradients in space; and
- at least one transport parameter representative for at least one optical transport operator; and wherein said integrator is configured for determining said corresponding plurality of values taking into account at least a corresponding one of said temporal change map, said spatial change map and said at least one transport parameter.

7. A system for encoding and decoding a video signal, comprising at a first device the encoder of any one of the claims 1-4 and at a second device, remote from said first device, the decoder of any one of the claims 5-6.

8. A method for encoding a video signal, comprising the following steps performed at an encoder:

   - quantizing a video signal; and
   - downsampling said quantized video signal by dropping a number of samples of said quantized video signal based on a downsampling scheme, such that said quantized video signal contains fewer remnant samples after downsampling.

9. The method of claim 8, wherein said quantizing of said video signal comprises quantizing said video signal, preferably coarsely, by reducing a dynamic range of values of samples of said video signal.

10. The method of any one of the claims 8-9, comprising at said encoder:

    - detecting at least one of:

        - a temporal change map representing video signal gradients in time; and
        - a spatial change map representing video signal gradients in space;

    - downsampling said quantized video signal taking into account at least a corresponding one of said temporal change map and said spatial change map, such that video signal spatiotemporal regions with significant change retain more remnant samples; and
    - communicating information pertaining to at least said corresponding one of said temporal change map and said spatial change map to an upsampler of a decoder; and comprising at said decoder:
    - upsampling said encoded video signal taking into account said communicated information; and
    - controlling said at least one, preferably finite, integration window taking into account sampling densities of spatiotemporal regions of said upsampled video signal.

11. The method of any one of the claims 8-10, comprising at said encoder:

    - detecting at least one transport parameter representative for at least one optical transport operator; and
    - downsampling said quantized video signal taking into account said at least one transport parameter; and comprising at a or said decoder:
    - determining said corresponding plurality of values taking into account said at least one transport parameter.

12. A method for decoding an encoded video signal, comprising the following steps performed at a decoder:

    - upsampling said encoded video signal by allocating a plurality of filler samples interspersed among said remnant samples of said encoded video signal based on an upsampling scheme associated with said downsampling scheme; and
    - determining a corresponding plurality of values for said plurality of filler samples by integrating at least one plurality of samples of said remnant samples of said encoded video signal; wherein said integrating of said at least one plurality of samples is performed over at least one, preferably finite, integration window chosen from the following integration windows: a spatiotemporal integration window, a spatial integration window and a temporal integration window.

13. The method of claim 12, comprising:

    - estimating at least one of:

- a temporal change map representing video signal gradients in time;
- a spatial change map representing video signal gradients in space; and
- at least one transport parameter representative for at least one optical transport operator; and

- determining said corresponding plurality of values taking into account at least a corresponding one of said temporal change map, said spatial change map and said at least one transport parameter.

**14.** A computer program product comprising non-transitory computer-executable instructions configured to, when executed, perform the steps of any one of the methods of the claims 8-11.

**15.** A computer program product comprising non-transitory computer-executable instructions configured to, when executed, perform the steps of any one of the methods of the claims 12-13.

FIG. 1

FIG. 2

PRIOR ART

## FIG. 3
### PRIOR ART

## FIG. 4
### PRIOR ART

FIG. 5

FIG. 6

71

72

77

710

770

73

760

76

730

740

750

74

75

<u>FIG. 7</u>

81

82

810

87

870

860

83

86

830

840

850

84

85

<u>FIG. 8</u>

FIG. 9

Europäisches
Patentamt

European
Patent Office

Office européen
des brevets

## EUROPEAN SEARCH REPORT

**Application Number**

EP 14 30 6188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/108183 A1 (BRULS WILHELMUS HENDRIKUS ALFONSUS [NL] ET AL) 2 May 2013 (2013-05-02) | 1-3, 5-10, 12-15 | INV. H04N19/44 H04N19/85 |
| Y | * paragraph [0030] - paragraph [0034] * ----- | 4,11 | |
| X | US 2009/245661 A1 (ILBERY PETER WILLIAM MITCHELL [AU]) 1 October 2009 (2009-10-01) * figure 2 * * paragraph [0082] * ----- | 1,5,7,8, 12,14,15 | |
| Y | US 2010/246680 A1 (TIAN DIHONG [US] ET AL) 30 September 2010 (2010-09-30) * paragraph [0043] * ----- | 4,11 | |

TECHNICAL FIELDS
SEARCHED        (IPC)

H04N

The present search report has been drawn up for all claims

| Place of search | Date of completion of the search | Examiner |
|---|---|---|
| Munich | 8 January 2015 | Regidor Arenales, R |

EPO FORM 1503 03.82 (P04C01)

**ANNEX TO THE EUROPEAN SEARCH REPORT
ON EUROPEAN PATENT APPLICATION NO.**

EP 14 30 6188

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2015

| Patent document cited in search report | | Publication date | Patent family member(s) | | Publication date |
|---|---|---|---|---|---|
| US 2013108183 | A1 | 02-05-2013 | AU | 2011275436 A1 | 28-02-2013 |
| | | | CA | 2804345 A1 | 12-01-2012 |
| | | | CN | 102959957 A | 06-03-2013 |
| | | | CN | 102986214 A | 20-03-2013 |
| | | | EP | 2591602 A1 | 15-05-2013 |
| | | | EP | 2591606 A1 | 15-05-2013 |
| | | | JP | 2013539610 A | 24-10-2013 |
| | | | KR | 20130124435 A | 13-11-2013 |
| | | | TW | 201215160 A | 01-04-2012 |
| | | | US | 2013107956 A1 | 02-05-2013 |
| | | | US | 2013108183 A1 | 02-05-2013 |
| | | | WO | 2012004709 A1 | 12-01-2012 |
| | | | WO | 2012004741 A1 | 12-01-2012 |
| US 2009245661 | A1 | 01-10-2009 | US | 2009245661 A1 | 01-10-2009 |
| | | | WO | 2008052278 A1 | 08-05-2008 |
| US 2010246680 | A1 | 30-09-2010 | US | 2010246680 A1 | 30-09-2010 |
| | | | US | 2013136185 A1 | 30-05-2013 |

EPO FORM P0459

For more details about this annex : see Official Journal of the European Patent Office, No. 12/82